# EUROPÄISCHE PATENTANMELDUNG

(11) **EP 2 811 444 A1**
(43) Veröffentlichungstag der Anmeldung: **10.12.2014**
(21) Anmeldenummer: 13171123.6
(22) Anmeldetag: 07.06.2013
(51) Int. Cl.: G06Q 20/04, G06K 19/07, G07B 15/02, G06Q 30/02, G06Q 20/32

(54) **Verfahren und Vorrichtung zur Ermittlung der Inanspruchnahme einer Dienstleistung eines öffentlichen Verkehrsmittels**

(71) Anmelder: Scheidt & Bachmann GmbH, 41238 Mönchengladbach (DE)
(72) Erfinder: Sohn, Stephan, 41379 Brüggen (DE); Höhn, Alfred, 41515 Grevenbroich (DE); Feiter, Manfred, 41238 Mönchengladbach (DE)
(74) Vertreter: Stenger, Watzke & Ring

(57) **Zusammenfassung**

Die Erfindung betrifft ein Verfahren zur Ermittlung der Inanspruchnahme einer Beförderungsdienstleistung, in einem öffentlichen Verkehrsmittel, wobei ein an einem Hintergrundsystem (200) registriertes mobiles Endgerät (300) eines Nutzers Identifikationsdaten von einer einem Verkehrsmittel zugeordneten Kontakteinrichtung (500) empfängt, wobei die Identifikationsdaten eine absolute Zeitinformation aufweisen, wobei das mobile Endgerät (300) die Identifikationsdaten an das Hintergrundsystem (200) übermittelt, und wobei das Hintergrundsystem (200) anhand zeitlich aufeinanderfolgender Identifikationsdaten und Fahrtdaten des Verkehrsmittels eine Fahrtpreisberechnung durchführt.

## Beschreibung

Die Erfindung betrifft ein Verfahren sowie eine Vorrichtung zur Ermittlung der Inanspruchnahme einer Beförderungsdienstleistung in einem öffentlichen Verkehrsmittel, wobei ein an einem Hintergrundsystem registriertes mobiles Endgerät eines Nutzers Identifikationsdaten von einer einem Verkehrsmittel zugeordneten Kontakteinrichtung empfängt, wobei das mobile Endgerät die Identifikationsdaten an das Hintergrundsystem übermittelt, und wobei das Hintergrundsystem anhand der Identifikationsdaten eine Fahrtpreisberechnung durchführt.

Verfahren der vorgenannten Art sind im Stand der Technik bereits bekannt. Diese werden benutzt, um eine Fahrpreiserhebung beziehungsweise Fahrtpreisberechnung für den öffentlichen Personenverkehr zu ermöglichen. Dabei werden in Anspruch genommene Beförderungsleistungen mittels mobiler Endgeräte erfasst und zur Verrechnung an ein Hintergrundsystem übermittelt. Beispielsweise sind Verfahren bekannt, bei welchen der Aufenthalt und die Bewegung von Smartphones automatisiert erkannt wird und daraus Rückschlüsse auf benutzte Verkehrsmittel gezogen werden. Anhand der Bewegungsdaten werden Fahrtpreise berechnet. Daneben sind im Stand der Technik die sogenannten Check-In/Check-Out (CICO) Systeme bekannt, bei denen sich ein Nutzer mit seinem mobilen Endgerät in einem Verkehrsmittel des öffentlichen Personenverkehrs an- und abmeldet. Eines der bekannten CICO-Systeme auf Basis von Smartphones ist das sogenannte "Touch and Travel"-System der Deutsche Bahn AG. Dieses System kann von registrierten Nutzern genutzt werden. Das System verfügt über Kontakteinrichtungen, sogenannte Kontaktpunkte, die an Bahnsteigen, Haltestellen und dergleichen angebracht sind. Vor jeder Fahrt meldet sich der Nutzer mit seinem Smartphone in dem System an, wobei er die integrierte Positionsbestimmung des Smartphones nutzt und den auf dem Kontaktpunkt aufgedruckten Barcode scannt, die aufgedruckte Nummer des Kontaktpunktes in sein Smartphone eingibt oder die Nummer des Kontaktpunkt mittels Nallfeldkommunikation (NFC) mit dem Smartphone ausliest. Die Abmeldung aus dem System erfolgt in gleicher Art und Weise bei Beendigung der Fahrt. Die eingelesenen Kontaktpunktdaten werden vom Smartphone an das Touch-and-Travel-Hintergrundsystem gesendet, dort zu Fahrten zusammengestellt und anschließend dem jeweiligen Nutzer in Rechnung gestellt. Zu diesem Zweck hat der Nutzer bei seiner Registrierung im Hintergrundsystem unter anderem seine Zahlungsdaten anzugeben.

Obwohl sich die bekannten Systeme bewährt haben, sind die Kontakteinrichtungen nicht für den Einsatz in einem Verkehrsmittel selbst, d. h. beispielsweise in einem Bahnwaggon geeignet, da es unbekannt ist, an welchem Ort der Nutzer zugestiegen oder ausgestiegen ist. Zwar ist der Fahrplan des Verkehrsmittels bekannt, um anhand einer Uhrzeit auf den aktuellen Aufenthaltsort zu schließen, jedoch kann der exakte Zeitpunkt des Einlesens eines mobilen Endgerätes in das System nicht sicher ermittelt werden, da das Einlesen über das mobile Endgerät allenfalls mit der eigenen Uhrzeit des Endgeräts registriert wird, welche jedoch falsch sein kann. Es ist ebenfalls nicht sichergestellt, dass der Einlesevorgang ohne nennenswerte Verzögerung von dem mobilen Endgerät an das Hintergrundsystem übermittelt wird. Somit ist auch ein eventueller Zeitstempel des Hintergrundsystems nicht aussagekräftig.

Ein weiterer Nachteil der bekannten ortsfesten Kontakteinrichtungen ist, dass beim Einlesen der Identifikationsdaten der Kontakteinrichtung nicht unterschieden wird, ob der Nutzer bestimmte fahrzeuggebundene Komfortmerkmale, wie beispielsweise eine Fahrt erster oder zweiter Klasse, beansprucht. Solche Komfortmerkmale müssen daher nutzerbezogen in dem Hintergrundsystem hinterlegt werden.

Es ist somit Aufgabe der vorliegenden Erfindung, ein Verfahren sowie eine Vorrichtung zur Ermittlung der Inanspruchnahme einer Beförderungsdienstleistung zu schaffen, bei welchem die Kontakteinrichtungen in den Verkehrsmitteln selbst, das heißt in den Fahrzeugen, installiert werden können, wobei jedoch stets bekannt ist, wo ein Nutzer in das Verkehrsmittel zugestiegen oder ausgestiegen ist. Desweiteren soll ein Verfahren geschaffen werden, welches die Unterscheidung von in Anspruch genommenen Komfortmerkmalen registriert, das heißt beispielsweise die Inanspruchnahme einer 1. Klasse-Fahrt.

Zur Lösung der vorgenannten Aufgabe schlägt die Erfindung ein Verfahren zur Ermittlung der Inanspruchnahme einer Beförderungsdienstleistung in einem öffentlichen Verkehrsmittel vor, wobei ein an einem Hintergrundsystem registriertes mobiles Endgerät eines Nutzers Identifikationsdaten von einer einem Verkehrsmittel zugeordneten Kontakteinrichtung ausliest, wobei die Identifikationsdaten eine absolute Zeitinformation aufweisen, wobei das mobile Endgerät die Identifikationsdaten an das Hintergrundsystem übermittelt, und wobei das Hintergrundsystem anhand zeitlich aufeinanderfolgender Identifikationsdaten und Fahrtdaten des Verkehrsmittels eine Fahrtpreisberechnung durchführt.

Anhand der absoluten Zeitinformation kann ein Einlesevorgang an einer bestimmten Kontakteinrichtung einem definierten, zu dem Einlesezeitpunkt korrespondierenden Standort zugeordnet werden. Daher wird mit der Erfindung eine Möglichkeit geschaffen, die Kontakteinrichtungen in den Verkehrsmitteln selbst zu installieren. Dadurch ergibt sich zum einen ein höherer Komfort für die Fahrgäste, da diese sofort in das Verkehrsmittel einsteigen können und nicht Gefahr laufen, während des Einlesevorgangs an der Kontakteinrichtung das Verkehrsmittel zu verpassen. Darüber hinaus können die Kontakteinrichtungen an bestimmten Standorten innerhalb des Verkehrsmittels selbst angeordnet werden, das heißt beispielsweise in einem Abteil 1. oder 2. Klasse. Somit lässt sich anhand der Identifikationsdaten der Kontakteinrichtung, welche beispielsweise auch die Gerätenummer der jeweiligen Kontakteinrichtung umfassen, die in Anspruch genommene Dienstleistung entsprechend abrechnen. In jedem Fall ist es möglich, anhand der absoluten Zeitinformation und der Fahrtdaten des benutzten Verkehrsmittels, beispielsweise Fahrplänen, den Standort der Kontakteinrichtung und damit auch des Fahrgastes zu ermitteln.

Ein besonderer Vorteil der Erfindung ist dabei auch, dass die Kontakteinrichtungen sehr einfach aufgebaut sein können und zudem ohne externe elektrische Versorgung, ein Datennetzwerk und ohne GPS-Standortbestimmung auskommen.

Die erfindungsgemäße Vorrichtung weist dabei mindestens eine mit einem mobilen Endgerät kommunizierende Kontakteinrichtung und ein mit dem mobilen Endgerät kommunizierendes Hintergrundsystem auf. Die Kontakteinrichtung weist einen mit einem Mikroprozessor in Datenverbindung stehenden Funkuhrenbaustein auf, welcher ausgebildet ist, ein absolutes Zeitsignal von einem Zeitzeichensender, beispielsweise dem Zeitzeichensender DCF 77, zu synchronisieren. Der Funkuhrenbaustein erhält als Zeitreferenz also die offizielle mitteleuropäische Zeit MEZ beziehungsweise die mitteleuropäische Sommerzeit MESZ. Die Kontakteinrichtungen können sowohl an stationären Aufstellorten als auch an mobilen Aufstellorten, das heißt in den Verkehrsmitteln selbst, aufgestellt sein. Stationäre Aufstellorte sind beispielsweise Bahnsteige, Haltestellen, U- und S-Bahnstationen. Mobile Aufstellorte sind unter anderem Züge, Waggons, Abteile, U-Bahnen, S-Bahnen, Straßenbahnen, Busse, Fähren und viele andere. Sofern eine Kontakteinrichtung an einem stationären Aufstellort verwendet wird, funktioniert diese wie im Stand der Technik bekannt alleine mit der Identifikationsnummer des Gerätes. Die Zeitinformation sowie Fahrtdaten werden nicht benötigt, da der Standort bereits über die Identifikationsnummer der Kontakteinrichtung bekannt ist.

Es kann weiterhin vorgesehen sein, dass die Identifikationsdaten eine Information zu dem Standort der Kontakteinrichtung innerhalb des Verkehrsmittels aufweisen. Somit lassen sich mittels der Information zu dem Standort der Kontakteinrichtung innerhalb des Verkehrsmittels Informationen über die Inanspruchnahme einer 1. oder 2. Klasse-Fahrt oder ähnliche Komfortmerkmale ermitteln.

Es ist weiterhin vorgesehen, dass das mobile Endgerät die Identifikationsdaten aus der Kontakteinrichtung mittels Nahfeldkommunikation (NFC) ausliest. Dafür verwendet der am Hintergrundsystem registrierte Nutzer ein mobiles Endgerät, welches fähig ist, über NFC-Technologie zu kommunizieren. Über eine auf dem Endgerät installierte mobile Datenanwendung (App) aktiviert der Nutzer den NFC-Datenaustausch seines Endgerätes, welches im Abstand einiger weniger Zentimeter zu der Kontakteinrichtung die Daten ausliest.

Alternativ kann vorgesehen sein, dass das mobile Endgerät die Identifikationsdaten über einen auf einem Display der Kontakteinrichtung angezeigten Barcode ausliest. Diese Variante empfiehlt sich insbesondere für solche Endgeräte, die nicht NFC-fähig sind. Über die mobile Datenanwendung liest das mobile Endgerät den Barcode, welcher auf dem Display der Kontakteinrichtung angezeigt wird. Die ausgelesenen Daten sind inhaltlich die gleichen, die auch per NFC ausgelesen werden können. Die Weiterverarbeitung der Daten erfolgt ebenfalls dementsprechend.

Im Sinne der Erfindung kann vorgesehen sein, dass die empfangenen Identifikationsdaten auf einem Display des mobilen Endgerätes angezeigt werden. Wenigstens Teile der von dem mobilen Endgerät eingelesenen Identifikationsdaten werden dem Nutzer zur Kontrolle angezeigt. Dabei kann der Nutzer beispielsweise bestätigen, was mit den Daten geschehen soll. Beispielsweise kann er in einem Auswahlmenü angeben, ob er aktuell den Eintritt in das öffentliche Verkehrsmittel, den Austritt oder ein Umsteigen innerhalb des Systems vollzieht. Alternativ kann der Nutzer einen Abbruch veranlassen, so dass die eingelesenen Daten aus dem mobilen Endgerät gelöscht werden. Wenn "Einstieg", "Austritt" oder "Umsteigen" gewählt wird, werden die von dem Mobilgerät eingelesenen Identifikationsdaten zusammen mit beispielsweise einer Gerätekennung des mobilen Endgerätes an das Hintergrundsystem übertragen. Damit ist dem Hintergrundsystem bekannt, dass der registrierte Nutzer des mobilen Endgeräts zu einem eineindeutigen Zeitpunkt an der jeweiligen Kontakteinrichtung entweder eingestiegen, ausgestiegen oder umgestiegen ist.

Weiterhin kann das mobile Endgerät die empfangenen Identifikationsdaten vor der Übermittlung an das Hintergrundsystem speichern. Die Speicherung empfiehlt sich stets dann, wenn der Aufbau einer Datenverbindung zwischen dem mobilen Endgerät und dem Hintergrundsystem nicht möglich ist. Dadurch werden die Identifikationsdaten in dem mobilen Endgerät zwischengespeichert und gesendet, sobald eine Datenverbindung zu dem Hintergrundsystem möglich ist. Alternativ ist es jedoch auch möglich, dass die eingelesenen Identifikationsdaten direkt, das heißt ohne eine Anzeige auf dem Display des mobilen Endgerätes oder ohne Zwischenspeicherung direkt an das Hintergrundsystem übertragen werden.

Schließlich empfiehlt es sich, dass die Inanspruchnahme der Dienstleistung mittels eines Kontrollgerätes abgefragt wird, in dem auf einem Display des mobilen Endgerätes angezeigte Registrierungsdaten oder mittels Nahfeldkommunikation von dem mobilen Endgerät an das Kontrollgerät übermittelte Registrierungsdaten von dem Kontrollgerät verifiziert werden. Dadurch ergibt sich die Möglichkeit, einen Fahrgast dahingehend zu kontrollieren, ob er eine gültige Fahrerlaubnis besitzt, das heißt, ob er vor Fahrtbeginn einen Anmeldevorgang an einer Kontakteinrichtung vorgenommen hat. Diese Überprüfung findet durch einen Kontrolleur mit einem entsprechenden Kontrollgerät statt und kann sowohl barcodebasiert als auch NFC-basiert erfolgen.

Es empfiehlt sich, dass die Registrierungsdaten einen eineindeutigen Gerätecode des mobilen Endgerätes aufweisen, welchen das Kontrollgerät zur Verifikation der Fahrtberechtigung an das Hintergrundsystem übermittelt. Das Kontrollgerät fragt auf Grundlage der Registrierungsdaten am Hintergrundsystem an, welches der letzte übermittelte Einlesevorgang an einer Kontakteinrichtung war. Das Kontrollgerät kann dann anhand der Antwort des Hintergrundsystems entscheiden, ob das Endgerät für die aktuelle Fahrt berechtigt ist oder nicht.

Neben dem zuvor dargestellten Verfahren sieht die Erfindung ebenso eine Vorrichtung vor, mit welcher eine Ermittlung der Inanspruchnahme einer Dienstleistung in einem öffentlichen Verkehrsmittel durchgeführt werden kann. Die Vorrichtung weist dabei mindestens eine mit einem mobilen Endgerät kommunizierende Kontakteinrichtung auf sowie ein mit dem mobilen Endgerät kommunizierendes Hintergrundsystem. Erfindungsgemäß weist die Kontakteinrichtung zudem einen Mikroprozessor sowie einen damit verbundenen Funkuhrenbaustein auf, welcher ausgebildet ist, ein absolutes Zeitsignal von einem Zeitzeichensender zu empfangen.

Die Kontakteinrichtung weist ein Gehäuse auf, in welchem sich ein Mikroprozessor und daran angeschlossen ein Funkuhrenbaustein mitsamt Antenne befindet. Die Antenne kann innerhalb oder außerhalb des Gehäuses angeordnet sein. Der Funkuhrenbaustein gibt ein Zeitsignal beispielsweise, bestehend aus Datum und zumindest sekundengenauer Uhrzeit, an den Mikroprozessor weiter. Dieser Funkuhrenbaustein liefert somit die absolute Zeitinformation, welche in Verbindung mit Fahrtdaten des Verkehrsmittels eine Information über den zeitlich korrespondierenden Standort der Kontakteinrichtung ermöglicht.

Im Folgenden wird die Erfindung anhand von Ausführungsbeispielen näher erläutert. Dabei zeigen:
- Fig. 1:: Eine Systemübersicht,
- Fig. 2:: eine erfindungsgemäße Vorrichtung unter Nutzung von NFC-Technologie,
- Fig. 3:: eine erfindungsgemäße Vorrichtung unter Nutzung eines Barcodes,
- Fig. 4:: einen Aufbau einer Kontakteinrichtung,
- Fig. 5:: ein Kontrollgerät unter Nutzung eines Kontroll-Barcodes,
- Fig. 6:: ein Kontrollgerät unter Nutzung eines Gerätebarcodes,
- Fig. 7:: ein Kontrollgerät unter Nutzung der NFC-Technologie,
- Fig. 8:: ein Kontrollgerät unter Nutzung der NFC-Technologie in einer zweiten Variante.

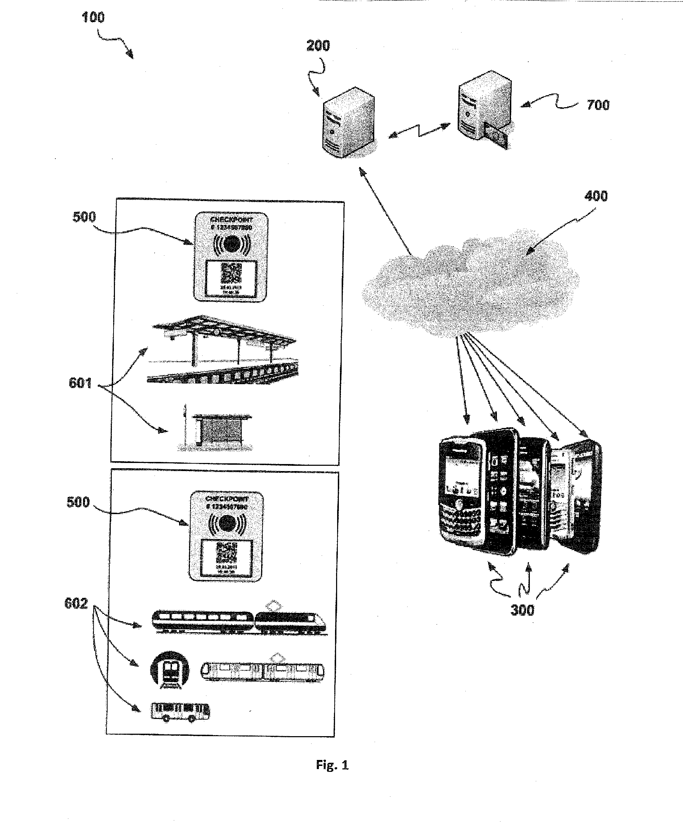

Fig. 1 zeigt eine Vorrichtung 100 zur Ermittlung der Inanspruchnahme einer Dienstleistung in einem öffentlichen Verkehrsmittel. Die Vorrichtung 100 besteht aus einem Hintergrundsystem 200, welches über ein Netzwerk 400 mit mobilen Endgeräten 300 verbunden ist. Die Vorrichtung 100 verfügt über Kontakteinrichtungen 500, die sowohl an stationären Standorten 601 als auch an mobilen Standorten 602 aufgestellt sein können. Stationäre Standorte 601 sind beispielsweise Bahnsteige, Haltestellen, U- und S-Bahnstationen. Mobile Standorte 602 sind beispielsweise Züge, Waggons, Abteile, U-Bahnen, S-Bahnen, Straßenbahnen, Busse, Fähren und so weiter.

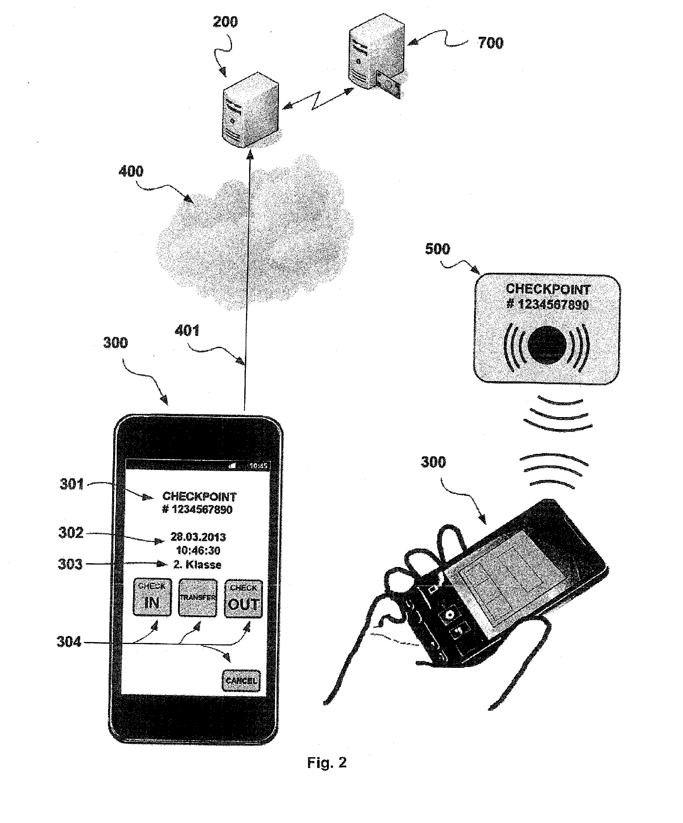

Fig. 2 zeigt die Anwendung des Verfahrens mit einer erfindungsgemäßen Vorrichtung 100. Ein am Hintergrundsystem 200 registrierter Nutzer führt ein mobiles Endgerät 300, hier ein Smartphone, mit sich, welches fähig ist, über NFC-Technologie zu kommunizieren. Über eine auf dem mobilen Endgerät 300 installierte mobile Datenanwendung aktiviert der Nutzer den NFC-Datenaustausch seines mobilen Endgerätes 300. Das Endgerät 300 wird nun in einem Abstand von wenigen Zentimetern vor die Kontakteinrichtung 500 gehalten, so dass das Endgerät 300 die Identifikationsdaten der Kontakteinrichtung 500 auslesen kann. Die Identifikationsdaten umfassen eine systemweit eineindeutige Identifikationsnummer 301 der Kontakteinrichtung 500, Datum und Uhrzeit 302 des Einlesevorgangs, eventuell zu der Kontakteinrichtung 500 hinterlegte weitere Merkmale, wie zum Beispiel eine Standortinformation 303, die Hinweis auf den Standort innerhalb eines 2. Klasse-Abteils gibt.

Zumindest Teile der eingelesenen Daten 301, 302, 303 werden dem Nutzer der Applikation zur Kontrolle auf dem Display des mobilen Endgerätes 300 angezeigt. Der Nutzer kann anschließend bestätigen, was mit den Daten geschehen soll, indem er mittels eines Auswahlmenüs 304 zwischen einem Eintritt in ein öffentliches Verkehrsmittel, einem Austritt aus dem öffentlichen Verkehrsmittel oder einem Umsteigen innerhalb des Systems wählt. Zusätzlich kann der Nutzer einen Abbruch durchführen, das heißt die eingelesenen Daten werden aus dem mobilen Endgerät 300 gelöscht. Wenn "Einstieg", "Austritt" oder "Umsteigen" gewählt wird, werden die von der Kontakteinrichtung 500 eingelesenen Daten 301, 302, 303 zusammen mit der Gerätenummer des mobilen Endgerätes 300 an das Hintergrundsystem 200 übertragen. Damit ist dem Hintergrundsystem 200 bekannt, dass der registrierte Nutzer des Endgeräts 300 zu dem eineindeutigen Zeitpunkt an der Kontakteinrichtung 500 in das öffentliche Verkehrsmittel eingestiegen, ausgestiegen oder umgestiegen ist 401.

Es ist möglich, die eingelesenen Daten 301, 302, 303 direkt, das heißt ohne diese dem Nutzer der Applikation anzuzeigen, zusammen mit der Gerätekennung des mobilen Endgerätes 300 an das Hintergrundsystem 200 zu übertragen 401. Sollte der Aufbau einer Datenverbindung zwischen dem mobilen Endgerät 300 und dem Hintergrundsystem 200 nicht möglich sein, kann das mobile Endgerät 300 die Daten aus dem Einlesevorgang zwischenspeichern und später senden, sobald eine Datenverbindung wieder möglich ist.

Insgesamt kann das Hintergrundsystem 200 somit aus der Kenntnis der absoluten Zeitinformation, das heißt Datum und Uhrzeit 302, und den Fahrtdaten (Fahrplänen) des benutzten Verkehrsmittels ermitteln, wo genau der Einlesevorgang stattgefunden hat.

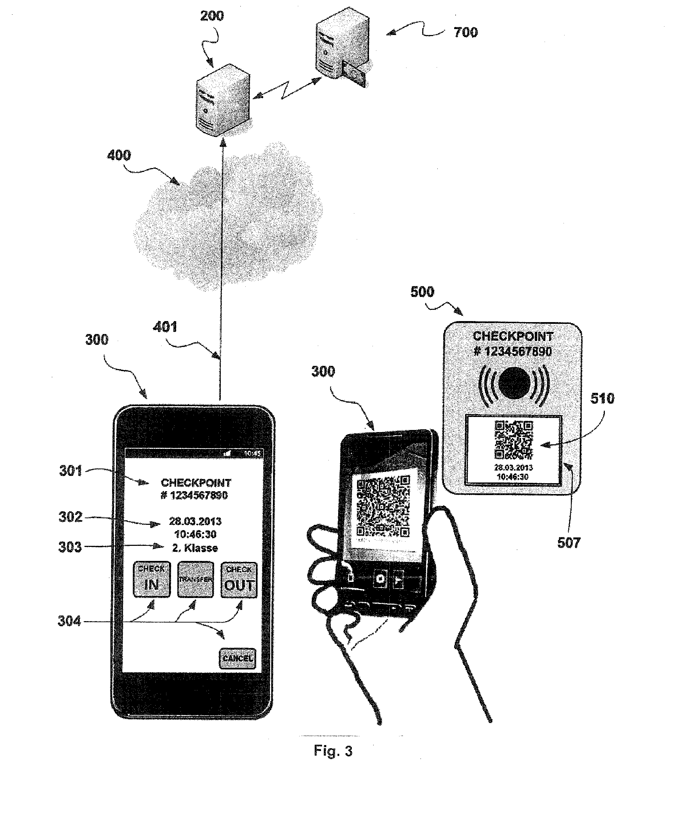

Figur 3 zeigt die Benutzung der Vorrichtung 100 mittels solcher mobilen Endgeräte 300, die nicht NFC-fähig sind. Mittels der auf dem mobilen Endgerät 300 installierten Applikation liest das Endgerät 300 einen dynamischen Barcode 510, welcher auf einer Anzeige 507der Kontakteinrichtung 500 angezeigt wird, ein. Die Daten, die aus dem Barcode 510 ausgelesen werden, sind genau die gleichen, die auch per NFC - wie in Fig. 2 dargestellt - ausgelesen werden können. Die Weiterverarbeitung der Daten erfolgt genauso, wie zuvor in Fig. 2 beschrieben.

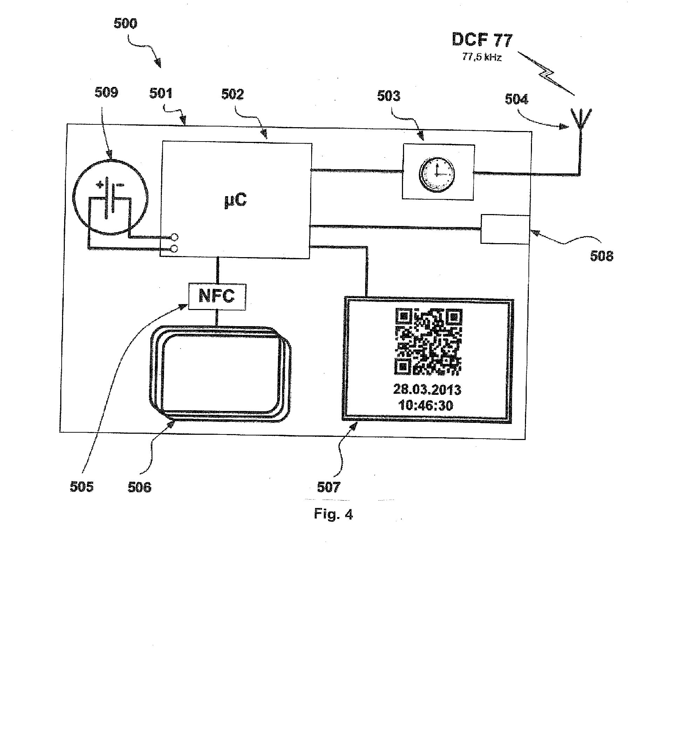

Fig. 4 zeigt den Aufbau einer Kontakteinrichtung 500. In einem Gehäuse 501 befinden sich ein Mikroprozessor 502 und daran angeschlossen ein Funkuhrenbaustein 503 mitsamt Antenne 504. Die Antenne 504 kann innerhalb oder außerhalb des Gehäuses 501 angeordnet sein. Der Funkuhrenbaustein 503 gibt eine absolute Zeitinformation, bestehend aus Datum und zumindest sekundengenauer Uhrzeit 302, an den Mikroprozessor 502 weiter. Der Funkuhrenbaustein 503 ist in der Lage, sich über die Antenne 504 mit dem Zeitzeichensender DCF 77 zu synchronisieren. Somit erhält der Funkuhrenbaustein 503 die offizielle mitteleuropäische Zeit MEZ beziehungsweise die mitteleuropäische Sommerzeit MESZ.

Der Mikroprozessor 502 speichert weiterhin als Stammdaten die systemweit eineindeutige Nummer der Kontakteinrichtung 500 sowie eventuell zu der Kontakteinrichtung 500 hinterlegte weitere Merkmale, beispielsweise den Standort der Kontakteinrichtung 500 in einem 1. oder 2. Klasse-Abteil. Diese Stammdaten erhält der Mikroprozessor 502 bei der Installation und Inbetriebnahme der Kontakteinrichtung 500 über eine Datenschnittstelle, die als Mikro-USB-Interface 508 ausgeführt ist. Auch kann der Mikroprozessor über das Mikro-USB-Interface 508 neu konfiguriert werden, das heißt neue Stammdaten erhalten oder mit neuer Software aktualisiert werden. Alternativ ist es möglich, den Mikroprozessor 502 über die kontaktlose Schnittstelle per NFC zu konfigurieren.

Der Mikroprozessor 502 wird mittels einer Batterie 509 betrieben. Der Mikroprozessor 502 kann dabei im laufenden Betrieb auch die verfügbare Batteriespannung auswerten und in dem Datensatz zur Verfügung stellen.

Aus den verfügbaren Daten stellt die im Mikroprozessor 502 gespeicherte Software einen per NFC oder per Barcode übertragbaren Datensatz zusammen und gibt diesen an den NFC-Kontroller 505 und als zweidimensionalen Barcode an die Anzeige 507 weiter. Der Datensatz enthält wenigstens das Datum und die Uhrzeit 302, die Stammdaten der Kontakteinrichtung 500, die Versionsnummer der auf dem Mikroprozessor 502 verwendeten Software, Daten zum Ladezustand der Batterie 509 und eine Information darüber, vor wie vielen Stunden der Funkuhrenbaustein 503 zum letzen Mal mit dem DCF 77-Sender synchronisiert wurde. Diese Daten können anschließend von einem mobilen Endgerät 300 ausgelesen werden, und zwar per NFC-Technologie kontaktlos über die NFC-Antenne 506 oder alternativ als Barcode 510 auf dem Display 507.

Wie in den Fign. 2 und 3 beschrieben, sendet das mobile Endgerät 300 die Daten nach dem Einlesen an das Hintergrundsystem 200. Das Hintergrundsystem 200 erhält auf diese Weise nicht nur Informationen über den Anmelde-, Umsteige- oder Abmeldevorgang eines Nutzers, sondern ebenso auch die letzten bekannten technischen Zustandsdaten der Kontakteinrichtung 500, beispielsweise Batteriezustand, Softwareversion und Synchronisationsstatus des Funkuhrenbausteins 503. Da die Kontakteinrichtung 500 selbst nicht datenmäßig vernetzt ist, nutzt diese die Datenübertragung mittels des mobilen Endgerätes 300, um den eigenen technischen Zustand an das Hintergrundsystem 200 zu übertragen. Kontakteinrichtungen 500, die technische Probleme haben, sind damit am Hintergrundsystem 200 identifizierbar.

Die Batterie 509 speist den Mikroprozessor 502, den Funkuhrenbaustein 503 und die Anzeige 507. Die Anzeige 507 kann dabei als "elektronisches Papier" ausgeführt sein - auch bekannt als "E-Ink-Display" - und braucht nur dann Energie, wenn die dargestellten Informationen sich ändern.

Die Anzeige 507, welche unter anderem auch Datum und Uhrzeit 302 anzeigt, kann beispielsweise alle 5 bis 15 Sekunden aktualisiert werden. Das Aktualisierungsintervall ist in der auf dem Mikroprozessor 502 installierten Software programmiert und kann durch eine Softwareaktualisierung geändert werden. Die NFC-seitige Kommunikation der Kontakteinrichtung 500 ist passiv, das heißt die nötige Energie zur kontaktlose Kommunikation wird nicht aus der Batterie 509 bezogen, sondern auf kontaktlose Weise aus dem mobilen Endgerät 300 über die Antenne 506 eingekoppelt.

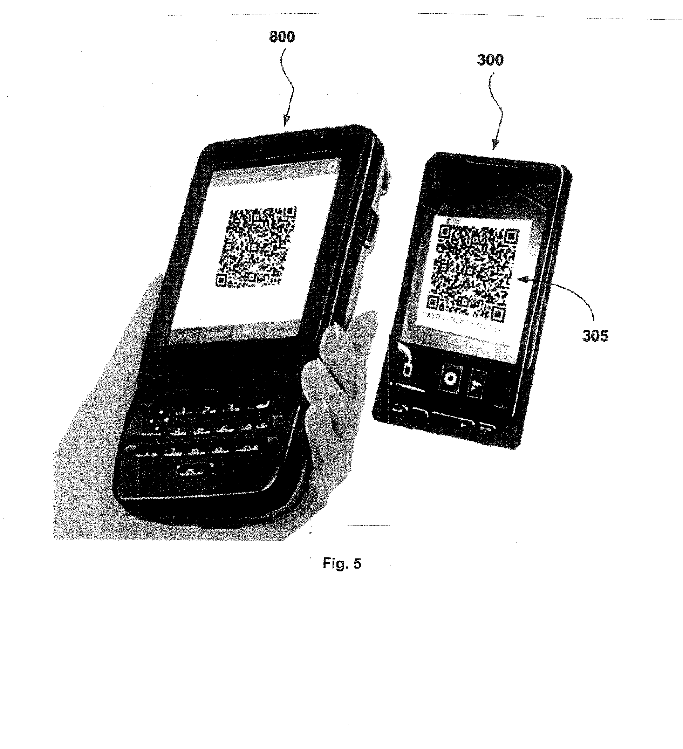

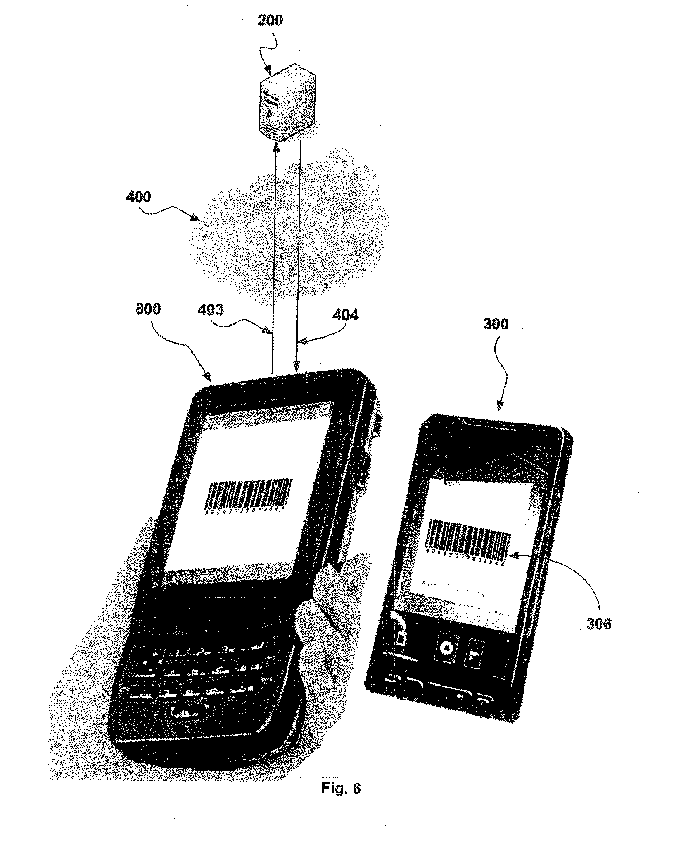

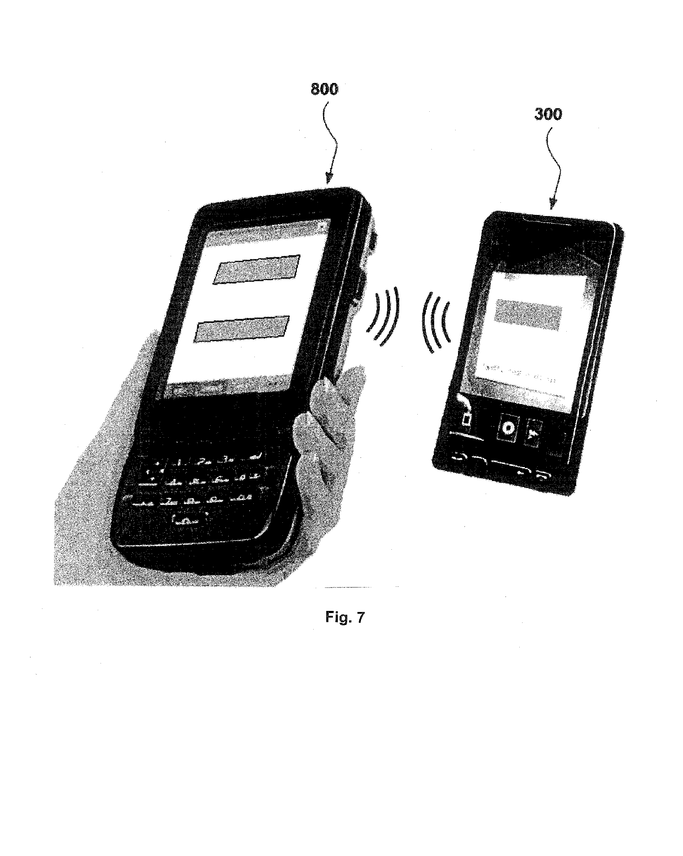

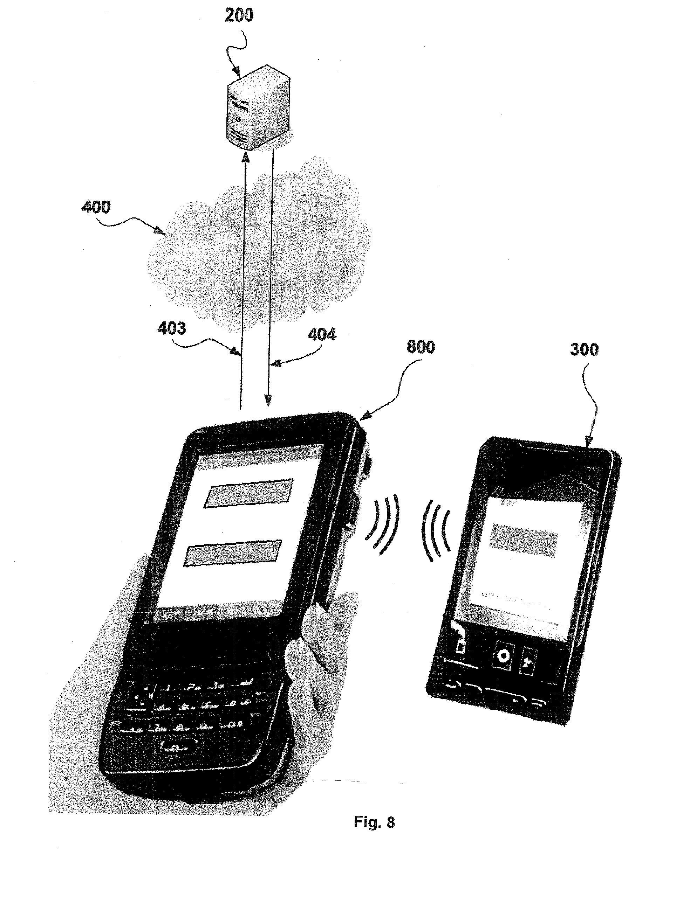

Die Fign. 5 bis 8 beschreiben Möglichkeiten, einen Fahrgast dahingehend zu kontrollieren, ob er eine gültige Fahrerlaubnis besitzt, das heißt ob er vor Fahrtbeginn einen Anmeldevorgang an einer Kontakteinrichtung 500 vorgenommen hat. Diese Überprüfung findet durch einen Kontrolleur mittels eines Kontrollgerätes 800 statt und kann sowohl barcodebasiert (Fign. 5 und 6) als auch NFC-basiert (Fign. 7 und 8) durchgeführt werden.

Fig. 5 zeigt die Kontrolle eines mobilen Endgerätes 300 auf das Vorhandensein eines gültigen Fahrausweises, wobei die Kontrolle auf Basis eines Kontrollbarcodes 305 stattfindet. Für die Kontrolle wird die auf dem mobilen Endgerät 300 installierte Applikation veranlasst, einen Kontrollbarcode 305 zu generieren und anzuzeigen. Der Kontrollbarcode 305 enthält zumindest die systemweit eineindeutige Kennung des Endgerätes 300, das Datum und die Uhrzeit 302 des letzten nicht gelöschten Einlesevorgangs und die Identifikationsnummer 301 der dabei verwendeten Kontakteinrichtung 500. Das Kontrollgerät 800 kann dann lokal, das heißt ohne einen Datenkontakt zum Hintergrundsystem 200, entscheiden, ob das Endgerät 300 für die aktuelle Fahrt gültig angemeldet ist.

Fig. 6 zeigt einen ebensolchen Kontrollvorgang für den Fall, dass das Kontrollgerät 800 Datenkontakt zum Hintergrundsystem 200 hat. Es genügt in diesem Fall, vom mobilen Endgerät 300 die systemweit eineindeutige Gerätekennung auszulesen. In einer weiteren Ausführungsform können eine Gerätekennung und ein Benutzername, unter welchem der Nutzer im Hintergrundsystem 200 registriert ist, ausgelesen werden. Das Kontrollgerät 800 kann mit der Gerätekennung am Hintergrundsystem 200 anfragen 403, welches der letzte übermittelte Einlesevorgang an einer Kontakteinrichtung 500 war. Das Kontrollgerät 800 kann dann anhand der Antwort 404 entscheiden, ob das Endgerät 300 für die aktuelle Fahrt gültig angemeldet ist.

Fig. 7 zeigt den gleichen Vorgang wie Fig. 5, nämlich das Kontrollieren eines mobilen Endgerätes 300 ohne einen Datenkontakt zwischen dem Kontrollgerät 800 und dem Hintergrundsystem 200. Der Datenaustausch zwischen Endgerät 300 und Kontrollgerät 800 erfolgt per NFC-Datenübertragung. Das Kontrollgerät 800 erhält die gleichen Daten aus dem Endgerät 300 wie in Fig. 5 dargestellt. Anhand dieser Daten kann das Kontrollgerät lokal, das heißt ohne einen Datenkontakt zum Hintergrundsystem 200, entscheiden, ob das Endgerät 300 für die aktuelle Fahrt gültig angemeldet ist.

Fig. 8 zeigt den gleichen Vorgang wie gemäß Fig. 6, nämlich das Kontrollieren eines mobilen Endgerätes 300 für den Fall, dass das Kontrollgerät 800 Datenkontakt mit dem Hintergrundsystem 200 hat. Dabei erfolgt der Datenaustausch zwischen dem Endgerät 300 und dem Kontrollgerät 800 per NFC-Datenübertragung. Das Kontrollgerät 800 benötigt die Gerätekennung des Endgerätes 300, um beim Hintergrundsystem 200 den letzten für dieses Endgerät 300 übermittelten Einlesevorgang abzufragen 403. Das Kontrollgerät 800 kann dann anhand der Antwort 404 entscheiden, ob das Endgerät 300 für die aktuelle Fahrt gültig angemeldet ist.

Für den Fall, dass das Kontrollgerät 800 Datenkontakt mit dem Hintergrundsystem 200 hat (Fign. 6 und 8) und das Endgerät 300 nicht verfügbar ist, weil beispielsweise die Batterie 509 während der Fahrt entleert wurde, kann ebenfalls über andere Medien, beispielsweise eine registrierte Kreditkartennummer des Nutzers oder über seinen Ausweis, geprüft werden, ob sich der Nutzer für die aktuelle Fahrt gültig angemeldet hat.

Das Hintergrundsystem 200 fügt die Identifikationsdaten zeitlich aufeinanderfolgender Anmelde-, Abmelde- und Umstiegsvorgänge eines Endgerätes 300 zu Fahrten zusammen und verrechnet diese mittels der hinterlegten Benutzerdaten mit dem angeschlossenen bargeldlosen Zahlungssystem 700. Solche Abrechnungen erfolgen typischerweise zu festgelegten Zeitpunkten, beispielsweise täglich, wöchentlich oder monatlich. Die Tatsache, dass Einzelfahrten über einen Zeitraum gesammelt werden, erlaubt die Abrechnung nach sogenannten Best-Price-Methoden, das heißt eine wiederkehrend benutzte Fahrstrecke wird zum Beispiel als Monatsfahrschein abgerechnet, falls dies nach dem zugrundeliegenden Tarif günstiger ist als die Addition der Einzelfahrten.

### Bezugszeichenliste

- 100: Vorrichtung
- 200: Hintergrundsystem
- 300: mobiles Endgerät
- 301: Identifikationsnummer
- 302: Datum, Uhrzeit
- 303: Standortinformation
- 304: Auswahlmenü
- 305: Kontrollbarcode
- 306: Gerätebarcode
- 400: Netzwerk
- 401: Datenübermittlung vom mobilem Endgerät zum Hintergrundsystem
- 403: Anfrage vom Kontrollgerät zum Hintergrundsystem
- 404: Antwort vom Hintergrundsystem zum Kontrollgerät
- 500: Kontakteinrichtung
- 501: Gehäuse
- 502: Mikroprozessor
- 503: Funkuhrenbaustein
- 504: Funkuhrantenne
- 505: NFC-Kontroller
- 506: N FC-Antenne
- 507: Anzeige
- 508: Mikro-USB-Interface
- 509: Batterie
- 510: Barcode
- 601: stationärer Standort
- 602: mobiler Standort
- 700: bargeldloses Zahlungssystem
- 800: Kontrollgerät

## Patentansprüche

1. Verfahren zur Ermittlung der Inanspruchnahme einer Beförderungsdienstleistung in einem öffentlichen Verkehrsmittel,
- wobei ein an einem Hintergrundsystem (200) registriertes mobiles Endgerät (300) eines Nutzers Identifikationsdaten von einer einem Verkehrsmittel zugeordneten Kontakteinrichtung (500) ausliest,
- wobei die Identifikationsdaten eine absolute Zeitinformation (302) aufweisen,
- wobei das mobile Endgerät (300) die Identifikationsdaten an das Hintergrundsystem (200) übermittelt,
- und wobei das Hintergrundsystem (200) anhand zeitlich aufeinanderfolgender Identifikationsdaten und Fahrtdaten des Verkehrsmittels eine Fahrtpreisberechnung durchführt.

2. Verfahren nach Anspruch 1, **dadurch gekennzeichnet, dass** die Identifikationsdaten eine eineindeutige Identifikationsnummer (301) der Kontakteinrichtung (500) und/oder eine Information (308) zu dem Standort (602) der Kontakteinrichtung (500) innerhalb des Verkehrsmittels aufweisen.

3. Verfahren nach Anspruch 1 oder 2, d. g., dass das mobile Endgerät (300) die Identifikationsdaten aus der Kontakteinrichtung (500) über Nahfeldkommunikation (NFC) ausliest.

4. Verfahren nach Anspruch 1 oder 2, d. g., dass das mobile Endgerät (300) die Identifikationsdaten über einen auf einem Display der Kontakteinrichtung (500) angezeigten Barcode ausliest.

5. Verfahren nach einem der vorhergehenden Ansprüche, d. g., dass die empfangenen Identifikationsdaten auf einer Anzeige (507) des mobilen Endgerätes (300) angezeigt werden.

6. Verfahren nach Anspruch 5, d. g., dass auf der Anzeige (507) des mobilen Endgerätes (300) ein Auswahlmenü (304) zur Zuordnung der Identifikationsdaten zu einem Beginn, einer Beendigung oder einer Änderung der jeweiligen Inanspruchnahme angezeigt wird, wobei die Identifikationsdaten nach der Zuordnung an das Hintergrundsystem (200) übermittelt werden.

7. Verfahren nach einem der vorhergehenden Ansprüche, d. g., dass das mobile Endgerät (300) die empfangenen Identifikationsdaten vor der Übermittlung an das Hintergrundsystem (200) speichert.

8. Verfahren nach einem der vorhergehenden Ansprüche, d. g., dass die Inanspruchnahme der Dienstleistung mittels eines Kontrollgerätes (800) abgefragt wird, indem auf einem Display des mobilen Endgerätes (300) angezeigte Registrierungsdaten oder mittels Nahfeldkommunikation von dem mobilen Endgerät (300) an das Kontrollgerät (800) übermittelte Registrierungsdaten von dem Kontrollgerät (800) verifiziert werden.

9. Verfahren nach einem der vorhergehenden Ansprüche, d. g., dass die Registrierungsdaten einen eineindeutigen Gerätecode des mobilen Endgerätes (300) aufweisen, welchen das Kontrollgerät (800) zur Verifikation der Fahrtberechtigung an das Hintergrundsystem (200) übermittelt.

10. Vorrichtung zur Ermittlung der Inanspruchnahme einer Beförderungsdienstleistung in einem öffentlichen Verkehrsmittel, insbesondere nach einem der Ansprüche 1 bis 9, mit mindestens einer mit einem mobilen Endgerät (300) kommunizierenden Kontakteinrichtung (500) und einem mit dem mobilen Endgerät (300) kommunizierenden Hintergrundsystem (200),
**dadurch gekennzeichnet, dass** die Kontakteinrichtung (500) einen Mikroprozessor (502) sowie einen damit verbundenen Funkuhrenbaustein (503) aufweist, welcher ausgebildet ist, ein absolutes Zeitsignal (302) von einem Zeitzeichensender zu empfangen.

## Geänderte Patentansprüche

### Geänderte Patentansprüche gemäss Regel 137(2) EPÜ.

**1.** Verfahren zur Ermittlung der Inanspruchnahme einer Beförderungsdienstleistung in einem öffentlichen Verkehrsmittel,
- wobei ein an einem Hintergrundsystem (200) registriertes mobiles Endgerät (300) eines Nutzers bei Einstiegen, Ausstiegen oder Umstiegen Identifikationsdaten von einer einem Verkehrsmittel zugeordneten Kontakteinrichtung (500) ausliest,
- wobei die Identifikationsdaten eine absolute Zeitinformation (302) aufweisen,
- wobei das mobile Endgerät (300) die Identifikationsdaten an das Hintergrundsystem (200) übermittelt,
- wobei das Hintergrundsystem (200) anhand einer absoluten Zeitinformation (302) und Fahrtdaten des Verkehrsmittels einen zu dem Zeitpunkt des Einstiegs, Ausstiegs oder Umstiegs korrespondierenden Standort (602) ermittelt,
- und wobei das Hintergrundsystem (200) die Identifikationsdaten zeitlich aufeinanderfolgender Einstiege, Ausstiege oder Umstiege eines Endgerätes (300) zu Fahrten zusammenfügt und eine Fahrtpreisberechnung durchführt.

**2.** Verfahren nach Anspruch 1, **dadurch gekennzeichnet, dass** die Identifikationsdaten eine eineindeutige Identifikationsnummer (301) der Kontakteinrichtung (500) und/oder eine Information (308) zu dem Standort (602) der Kontakteinrichtung (500) innerhalb des Verkehrsmittels aufweisen.

**3.** Verfahren nach Anspruch 1 oder 2, d. g., dass das mobile Endgerät (300) die Identifikationsdaten aus der Kontakteinrichtung (500) über Nahfeldkommunikation (NFC) ausliest.

**4.** Verfahren nach Anspruch 1 oder 2, d. g., dass das mobile Endgerät (300) die Identifikationsdaten über einen auf einem Display der Kontakteinrichtung (500) angezeigten Barcode ausliest.

**5.** Verfahren nach einem der vorhergehenden Ansprüche, d. g., dass die empfangenen Identifikationsdaten auf einer Anzeige (507) des mobilen Endgerätes (300) angezeigt werden.

**6.** Verfahren nach Anspruch 5, d. g., dass auf der Anzeige (507) des mobilen Endgerätes (300) ein Auswahlmenü (304) zur Zuordnung der Identifikationsdaten zu einem Beginn, einer Beendigung oder einer Änderung der jeweiligen Inanspruchnahme angezeigt wird, wobei die Identifikationsdaten nach der Zuordnung an das Hintergrundsystem (200) übermittelt werden.

**7.** Verfahren nach einem der vorhergehenden Ansprüche, d. g., dass das mobile Endgerät (300) die empfangenen Identifikationsdaten vor der Übermittlung an das Hintergrundsystem (200) speichert.

**8.** Verfahren nach einem der vorhergehenden Ansprüche, d. g., dass die Inanspruchnahme der Dienstleistung mittels eines Kontrollgerätes (800) abgefragt wird, indem auf einem Display des mobilen Endgerätes (300) angezeigte Registrierungsdaten oder mittels Nahfeldkommunikation von dem mobilen Endgerät (300) an das Kontrollgerät (800) übermittelte Registrierungsdaten von dem Kontrollgerät (800) verifiziert werden.

**9.** Verfahren nach einem der vorhergehenden Ansprüche, d. g., dass die Registrierungsdaten einen eineindeutigen Gerätecode des mobilen Endgerätes (300) aufweisen, welchen das Kontrollgerät (800) zur Verifikation der Fahrtberechtigung an das Hintergrundsystem (200) übermittelt.

**10.** Vorrichtung zur Durchführung eines Verfahrens zur Ermittlung der Inanspruchnahme einer Beförderungsdienstleistung in einem öffentlichen Verkehrsmittel, insbesondere eines Verfahrens nach einem der Ansprüche 1 bis 9, mit mindestens einer mit einem mobilen Endgerät (300) kommunizierenden Kontakteinrichtung (500) und einem mit dem mobilen Endgerät (300) kommunizierenden Hintergrundsystem (200),
**dadurch gekennzeichnet, dass** die Kontakteinrichtung (500) einen Mikroprozessor (502) sowie einen damit verbundenen Funkuhrenbaustein (503) aufweist, welcher ausgebildet ist, ein absolutes Zeitsignal (302) von einem Zeitzeichensender zu empfangen.
